# EUROPÄISCHE PATENTANMELDUNG

(11) **EP 4 016 256 A1**
(43) Veröffentlichungstag der Anmeldung: **22.06.2022**
(21) Anmeldenummer: 21213982.8
(22) Anmeldetag: 13.12.2021
(51) Int. Cl.: G06F 3/0354

(54) **AUFSTECKHÜLSE UND SYSTEM ZUM SCHREIBEN AUF EINEM TOUCHSCREEN-ENDGERÄT**

(30) Priorität: 18.12.2020 DE 202020107408 U
(71) Anmelder: Dietrich, Niklas, 59229 Ahlen (DE); Engelke, Johannes, 81543 München (DE); Zuch, Ben, 48317 Drensteinfurt (DE)
(72) Erfinder: Dietrich, Niklas, 59229 Ahlen (DE); Engelke, Johannes, 81543 München (DE); Zuch, Ben, 48317 Drensteinfurt (DE)
(74) Vertreter: Bourgeois, Christian

(57) **Zusammenfassung**

Die Erfindung betrifft eine Aufsteckhülse (1) zum Aufstecken auf eine konisch ausgebildete Stiftspitze (8) eines kabellos oder kabelgebunden mit einem Touchscreen-Endgerät verbindbaren oder verbundenen elektronischen Eingabestifts. Um eine haptische Rückmeldung an eine den Eingabestift führende Person während eines mittels des Eingabestifts durchgeführten Eingabevorgangs an einem Touchscreen-Endgerät zu verbessern, ist die Aufsteckhülse (1) zumindest teilweise als Hohlkegelstumpf ausgebildet und besteht die Aufsteckhülse zumindest teilweise aus einem Elastomer.

## Beschreibung

Die Erfindung betrifft eine Aufsteckhülse zum Aufstecken auf eine konisch ausgebildete Stiftspitze eines kabellos oder kabelgebunden mit einem Touchscreen-Endgerät verbindbaren oder verbundenen elektronischen Eingabestifts. Zudem betrifft die Erfindung ein System zum Schreiben auf einem Touchscreen-Endgerät, aufweisend wenigstens einen kabellos oder kabelgebunden mit dem Touchscreen-Endgerät verbindbaren oder verbundenen elektronischen Eingabestift mit einer konisch ausgebildeten Stiftspitze.

Touchscreen-Endgeräte, wie beispielsweise Tabletcomputer, werden zunehmend auch mittels spezieller elektronischer Eingabestifte bedient, beispielsweise um handschriftliche Eingaben, Handzeichnungen und dergleichen mit dem jeweiligen Touchscreen-Endgerät elektronisch erfassen und speichern zu können.

Die in Kontakt mit der Oberfläche eines Touchscreens bringbare Stiftspitze eines entsprechenden Eingabestifts ist in der Regel relativ empfindlich gegenüber mechanischen Belastungen und unterliegt insbesondere einer relativ hohen Abnutzung, insbesondere wenn an dem Touchscreen eine Schreibfolie mit rauer Oberfläche angeordnet ist, um eine höhere Gleitreibung zwischen der Stiftspitze des Eingabestifts und dem Touchscreen zu realisieren. Ohne eine solche Schreibfolie ist die Gleitreibung zwischen der Stiftspitze und der Touchscreen-Oberfläche derart gering, dass eine gewünschte Eingabe mittels des Eingabestifts nur recht unkontrolliert gelingt, was insbesondere zu einem ungenauen Schriftbild führt.

Um die Stiftspitze eines solchen Eingabestifts gegen entsprechende mechanische Belastungen zu schützen, ist es beispielsweise bekannt, eine Schutzkappe aus Silikon auf die Stiftspitze aufzustecken.

Es ist eine Aufgabe der Erfindung, eine haptische Rückmeldung an eine einen elektronischen Eingabestift führende Person während eines mittels des Eingabestifts durchgeführten Eingabevorgangs an einem Touchscreen-Endgerät zu verbessern.

Diese Aufgabe wird durch die Patentansprüche 1 und 10 gelöst. Vorteilhafte Ausgestaltungen sind in den Unteransprüchen, der nachfolgenden Beschreibung und den Figuren wiedergegeben, wobei diese Ausgestaltungen jeweils für sich genommen oder Kombination von wenigstens zwei dieser Ausgestaltungen miteinander einen vorteilhaften und/oder weiterbildenden Aspekt der Erfindung darstellen können.

Eine erfindungsgemäße Aufsteckhülse zum Aufstecken auf eine konisch ausgebildete Stiftspitze eines kabellos oder kabelgebunden mit einem Touchscreen-Endgerät verbindbaren oder verbundenen elektronischen Eingabestifts ist zumindest teilweise als Hohlkegelstumpf ausgebildet und besteht zumindest teilweise aus einem Elastomer.

Erfindungsgemäß wird statt einer herkömmlichen geschlossenen Schutzkappe aus Silikon eine mit einem axialen Durchgangskanal versehene Aufsteckhülse bereitgestellt, die, wenn sie vollständig als Hohlkegelstumpf ausgebildet ist, vollständig oder, wenn sie lediglich teilweise als Hohlkegelstumpf ausgebildet ist, deren hohlkegelstumpfförmig ausgebildeter Eingabeabschnitt auf die Stiftspitze eines elektronischen Eingabestifts aufgesteckt werden kann, um eine haptische Rückmeldung an eine den elektronischen Eingabestift führende Person während eines mittels des Eingabestifts durchgeführten Eingabevorgangs an einem Touchscreen-Endgerät zu verbessern. Dazu ist die Aufsteckhülse bzw. zumindest deren Eingabeabschnitt derart zumindest teilweise aus dem Elastomer hergestellt, dass ein elastomerer Abschnitt der Aufsteckhülse während des Eingabevorgangs in Kontakt mit der glatten Touchscreen-Oberfläche kommt, wobei die Gleitreibung zwischen dem elastomeren Abschnitt der erfindungsgemäßen Aufsteckhülse und der Touchscreen-Oberfläche deutlich größer ist als die Gleitreibung zwischen der Stiftspitze selbst und der Touchscreen-Oberfläche. Diese Erhöhung der Gleitreibung führt zu einem höheren Widerstand des Eingabestifts bei dessen Bewegung während des Eingabevorgangs auf der Touchscreen-Oberfläche. Dieser Widerstand gibt der den Eingabestift führenden Person eine verbesserte haptische Rückmeldung, was die Genauigkeit einer gewünschten Eingabe deutlich erhöht.

Die erfindungsgemäße Aufsteckhülse ist vorzugsweise derart ausgebildet, dass während eines Eingabevorgangs ausschließlich die Aufsteckhülse in Kontakt mit der Touchscreen-Oberfläche kommt. Somit schützt die Aufsteckhülse die Stiftspitze zusätzlich vor mechanischen Belastungen, insbesondere vor Abnutzung bzw. Abrieb, wodurch die Stiftspitze dauerhafter verwendet werden kann, insbesondere wenn auf einer rauen Schreibfolie geschrieben wird, welche die Stiftspitze sehr stark abnutzen und somit beschädigen würde.

Wenn die erfindungsgemäße Aufsteckhülse derart ausgebildet, dass während eines Eingabevorgangs ausschließlich die Aufsteckhülse in Kontakt mit der Touchscreen-Oberfläche kommt, wird darüber hinaus eine Geräuschentwicklung, die durch ein Auftreffen der Stiftspitze auf die Touchscreen-Oberfläche zwangsläufig entstehen würde, signifikant und zuverlässig reduziert bzw. fast vollständig vermieden.

Im Gegensatz zu einer herkömmlichen geschlossenen Schutzkappe aus Silikon kommt bei der erfindungsgemäßen Aufsteckhülse ein deutlich kleinerer Materialabschnitt in Kontakt mit der Touchscreen-Oberfläche, jedoch ein Materialabschnitt aus einem Elastomer und nicht aus Silikon, was mit einer deutlichen Erhöhung der Gleitreibung einhergeht, auch wenn der Materialabschnitt kleiner als bei der herkömmlichen Schutzkappe aus Silikon ist. Hierdurch wird die haptische Rückmeldung eines mit einer erfindungsgemäßen Aufsteckhülse ausgestatteten Eingabestifts deutlich verbessert.

Die erfindungsgemäße Aufsteckhülse kann beispielsweise ein 3D-Druck-Bauteil sein. Der Begriff "Hülse" und der Begriff "Hohlkegelstumpf" sagen beide aus, dass durch die erfindungsgemäße Aufsteckhülse mittig eine axiale Durchgangsbohrung verläuft, dass die Aufsteckhülse auch im Bereich ihrer Deckfläche bzw. an ihrem verjüngten axialen Ende also nicht entsprechend einer Kappe geschlossen ist.

Das Elastomer bildet zumindest einen elastischen bzw. flexiblen Abschnitt an dem verjüngten Ende der Aufsteckhülse. Beispielsweise kann die Aufsteckhülse bzw. deren hohlkegelstumpfförmig ausgebildeter Eingabeabschnitt einen Grundkörper aufweisen, der mit dem Elastomer gummiert ist. Wesentlich für die Erfindung ist, dass das Elastomer im Gegensatz zu einem deutlich weicheren Silikon abriebfest und widerstandsfähig ist.

Die erfindungsgemäße Aufsteckhülse bzw. deren hohlkegelförmig ausgebildeter Eingabeabschnitt kann auf die Stiftspitze eines elektronischen Eingabestifts aufgesteckt werden, der beispielsweise unter den Marken "Apple Pencil^{®}" oder "Logitech Crayon^{®}" angeboten wird. Während die Aufsteckhülse bzw. deren hohlkegelförmig ausgebildeter Eingabeabschnitt bei einem Apple Pencil^{®}-Eingabestift einfach auf die Stiftspitze aufgesteckt werden kann, muss bei einem Logitech Crayon^{®}-Eingabestift zunächst eine die Stiftspitze in einem Abstand radial außen umschließende Stützhülse entfernt werden. Anschließend kann die Aufsteckhülse, eventuell nach einem vorhergehenden Kürzen der Aufsteckhülse, bzw. deren hohlkegelförmig ausgebildeter Eingabeabschnitt auf die Stiftspitze aufgesteckt werden. Abschließend kann dann die Stützhülse wieder an dem übrigen Eingabestift befestigt werden. Zwischen der Stützhülse und der Stiftspitze ist ein zur Anordnung der Aufsteckhülse bzw. des hohlkegelförmig ausgebildeten Eingabeabschnitts auf die Stiftspitze ausreichender Bauraum vorhanden.

Das Touchscreen-Endgerät kann beispielsweise ein Tabletcomputer, ein Desktopcomputer, ein Smartphone oder dergleichen sein.

Gemäß einer vorteilhaften Ausgestaltung ist zwischen einer ringförmig ausgebildeten Deckfläche der Aufsteckhülse und einer Außenmantelfläche der Aufsteckhülse eine umlaufende Kante ausgebildet. Es zeigt sich, dass diese umlaufende scharfe Kante der Aufsteckhülse eine besonders gute haptische Rückmeldung während einer Nutzung eines entsprechend ausgestatteten Eingabestifts ermöglicht, die mit einer herkömmlichen Schutzkappe aus Silikon nicht erzielbar ist. Die Deckfläche bildet dabei das axiale Ende des verjüngten axialen Endes der Aufsteckhülse.

Gemäß einer weiteren vorteilhaften Ausgestaltung besteht die Aufsteckhülse zumindest im Bereich der umlaufenden Kante aus dem Elastomer. Hierbei kann die Aufsteckhülse einen Grundkörper aufweisen, der im Bereich der umlaufenden Kante mit dem Elastomer versehen bzw. mit diesem gummiert ist.

Gemäß einer weiteren vorteilhaften Ausgestaltung weist die Aufsteckhülse einen hohlzylinderförmigen Griffabschnitt auf, der sich axial an einen als Hohlkegelstumpf ausgebildeten Eingabeabschnitt der Aufsteckhülse anschließt. Insbesondere schließt sich der Griffabschnitt axial an die Grundfläche des Eingabeabschnitts an. Eine Außenmantelfläche des Griffabschnitts kann über zumindest einen Teil der Höhe des Griffabschnitts eine kreisringförmige, ovale, polygonale oder eine aus einer Mischung von wenigstens zwei dieser Formgebungen gebildete Querschnittsfläche aufweisen. An der Außenmantelfläche kann wenigstens eine Vertiefung, Abflachung oder Mulde ausgebildet sein. Der Griffabschnitt dient einer den Eingabestift führenden Person dazu, den Eingabestift mit der darauf aufgesteckten Aufsteckhülse besser und sicherer ergreifen und führen zu können.

Gemäß einer weiteren vorteilhaften Ausgestaltung ist der Griffabschnitt monolithisch mit dem Eingabeabschnitt verbunden. Hierdurch ist die Positionierung des Griffabschnitts relativ zu dem Eingabeabschnitt unveränderlich. Zudem müssen der Griffabschnitt und der Eingabeabschnitt nicht separat voneinander hergestellt und auf irgendeine Art und Weise mechanisch miteinander verbunden werden, was den Aufwand zur Anordnung der Aufsteckhülse an dem Eingabestift verringert.

Gemäß einer weiteren vorteilhaften Ausgestaltung ist an einer Innenmantelfläche der Aufsteckhülse wenigstens ein radial nach innen ragender, zumindest teilweise umlaufend an der Innenmantelfläche angeordneter Fixiervorsprung angeordnet. Der Fixiervorsprung kann in eine umlaufende Nut an dem Eingabestift eingreifen, um so die Aufsteckhülse axial an dem Eingabestift zu sichern. Der Fixiervorsprung kann beispielsweise an einem aufgeweiteten axialen Endabschnitt des oben genannten Eingabeabschnitts der Aufsteckhülse angeordnet sein. Der Fixervorsprung ist vorzugsweise monolithisch mit der übrigen Aufsteckhülse ausgebildet. Die Aufsteckhülse kann auch zwei, drei oder mehr entsprechende Fixiervorsprünge aufweisen, die umlaufend versetzt, insbesondere gleichmäßig versetzt, relativ zueinander angeordnet sein können. Alternativ kann die Aufsteckhülse einen einzigen Fixiervorsprung aufweisen, der vollständig umlaufend an der Innenmantelfläche der Aufsteckhülse angeordnet ist.

Gemäß einer weiteren vorteilhaften Ausgestaltung besteht die Aufsteckhülse vollständig aus dem Elastomer. Hierdurch wird die Herstellung der Aufsteckhülse einfacher und damit kostengünstiger.

Gemäß einer weiteren vorteilhaften Ausgestaltung ist das Elastomer ein thermoplastisches Elastomer. Dies macht beispielsweise die Herstellung der Aufsteckhülse unter Verwendung eines Gießverfahrens oder eines additiven Fertigungsverfahrens möglich.

Gemäß einer weiteren vorteilhaften Ausgestaltung ist das Elastomer ein thermoplastisches Polyurethan. Die Eigenschaften von thermoplastischem Polyurethan eignen sich besonders gut zum Erreichen einer optimalen haptischen Rückmeldung während einer Verwendung eines entsprechend ausgestatteten Eingabestifts. Das thermoplastische Polyurethan kann beispielsweise als Filament zum Einsatz in einem additiven Fertigungsverfahren bereitgestellt werden.

Ein erfindungsgemäßes System zum Schreiben auf einem Touchscreen-Endgerät weist wenigstens einen kabellos oder kabelgebunden mit dem Touchscreen-Endgerät verbindbaren oder verbundenen elektronischen Eingabestift mit einer konisch ausgebildeten Stiftspitze und wenigstens eine Aufsteckhülse nach einer der oben genannten Ausgestaltungen oder einer Kombination von wenigstens zwei dieser Ausgestaltungen miteinander auf.

Mit dem System sind die oben mit Bezug auf die Aufsteckhülse genannten Vorteile entsprechend verbunden. Der Eingabestift kann einen Drucksensor aufweisen, über den eine mechanische Belastung der Stiftspitze erfassbar ist. Hierzu kann die Stiftspitze axial verlagerbar an dem übrigen Eingabestift angeordnet und funktionstechnisch mit dem Drucksensor verbunden sein.

Gemäß einer vorteilhaften Ausgestaltung entspricht eine Höhe der Aufsteckhülse einer Höhe der Stiftspitze oder ist die Höhe der Aufsteckhülse kleiner als die Höhe der Stiftspitze. Das Höhenverhältnis kann beispielsweise derart gewählt sein, dass die Spitze der Stiftspitze um 0,2 mm bis 0,3 mm deckflächenseitig aus der Aufsteckhülse herausragt. Die Aufsteckhülse kann an ihrem größeren Ende bzw. grundflächenseitig mit einem axialen Ende des konischen Abschnitts der Stiftspitze abschließen, um eine eventuell gegebene axiale Verlagerbarkeit der Stiftspitze relativ zu dem übrigen Eingabestift nicht zu behindern, die beispielsweise erforderlich ist, um mechanische Belastungen der Stiftspitze mittels eines Drucksensors des Eingabestifts erfassen zu können. Es ist aber auch denkbar, dass die Höhe der Aufsteckhülse größer als die Höhe der Stiftspitze ist, sodass die Spitze der Stiftspitze deckflächenseitig nicht aus der Aufsteckhülse herausragt. Letzteres kann aber auch gegeben sein, wenn die Höhe der Aufsteckhülse kleiner als die Höhe der Stiftspitze ist und die Aufsteckhülse entsprechend eng ausgebildet und hierdurch nicht weitergehender auf die Stiftspitze aufschiebbar bzw. aufsteckbar ist. Es können auch unabhängig von dem Höhenverhältnis drei verschiedene axiale Relativstellungen zwischen der Spitze der Stiftspitze und der ringförmig ausgebildeten Deckfläche der Aufsteckhülse wahlweise realisiert sein. In einer ersten axialen Relativstellung liegt die Spitze der Stiftspitze in der Ebene der Deckfläche. In einer zweiten axialen Relativstellung ist die Spitze der Stiftspitze innerhalb der Aufsteckhülse bzw. innerhalb der Durchgangsbohrung der Aufsteckhülse angeordnet. In einer dritten axialen Relativstellung ist die Spitze der Stiftspitze außerhalb der Aufsteckhülse bzw. innerhalb der Durchgangsbohrung der Aufsteckhülse angeordnet.

Im Folgenden wird die Erfindung unter Bezugnahme auf die beigefügten Figuren anhand bevorzugter Ausführungsformen beispielhaft erläutert, wobei die nachfolgend genannten Merkmale sowohl jeweils für sich genommen als auch in unterschiedlicher Kombination miteinander einen vorteilhaften und/oder weiterbildenden Aspekt der Erfindung darstellen können. Es zeigt:
- Fig. 1: eine schematische und perspektivische Darstellung eines Ausführungsbeispiels für eine erfindungsgemäße Aufsteckhülse;
- Fig. 2: eine schematische Darstellung eines Längsschnitts der in Fig. 1 gezeigten Aufsteckhülse;
- Fig. 3: eine schematische Darstellung eines Längsschnitts eines Ausführungsbeispiels für ein erfindungsgemäßes System;
- Fig. 4: eine schematische Seitenansicht eines weiteren Ausführungsbeispiels für eine erfindungsgemäße Aufsteckhülse;
- Fig. 5: und eine schematische und perspektivische Darstellung eines weiteren Ausführungsbeispiels für eine erfindungsgemäße Aufsteckhülse von schräg unten.

In den Figuren sind gleiche bzw. funktionsgleiche Bauteile mit denselben Bezugszeichen versehen. Eine wiederholte Beschreibung solcher Bauteile kann weggelassen sein.

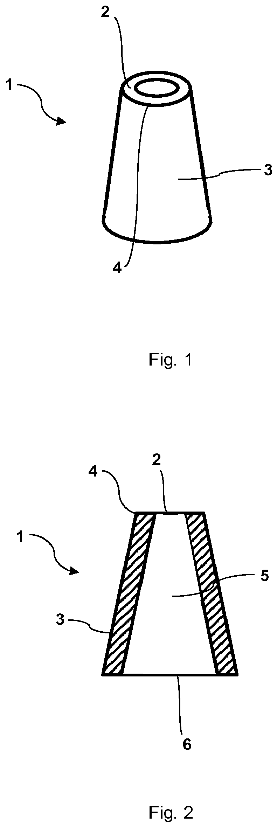

Fig. 1 zeigt eine schematische und perspektivische Darstellung eines Ausführungsbeispiels für eine erfindungsgemäße Aufsteckhülse 1 zum Aufstecken auf eine nicht gezeigte, konisch ausgebildete Stiftspitze eines kabellos oder kabelgebunden mit einem nicht gezeigten Touchscreen-Endgerät verbindbaren oder verbundenen, nicht gezeigten elektronischen Eingabestifts.

Die Aufsteckhülse 1 ist als Hohlkegelstumpf mit einer ringförmig ausgebildeten Deckfläche 2 und einer in Fig. 2 gezeigten, ringförmig ausgebildeten Grundfläche ausgebildet. Zudem besteht die Aufsteckhülse 1 vollständig aus einem Elastomer, insbesondere aus thermoplastischem Polyurethan.

Zwischen der Deckfläche 2 und einer Außenmantelfläche 3 der Aufsteckhülse 1 ist eine umlaufende scharfe Kante 4 ausgebildet.

Fig. 2 zeigt eine schematische Darstellung eines Längsschnitts der in Fig. 1 gezeigten Aufsteckhülse 1. Es sind eine Innenmantelfläche 5 und die ringförmig ausgebildete Grundfläche 6 der Aufsteckhülse 1 gezeigt.

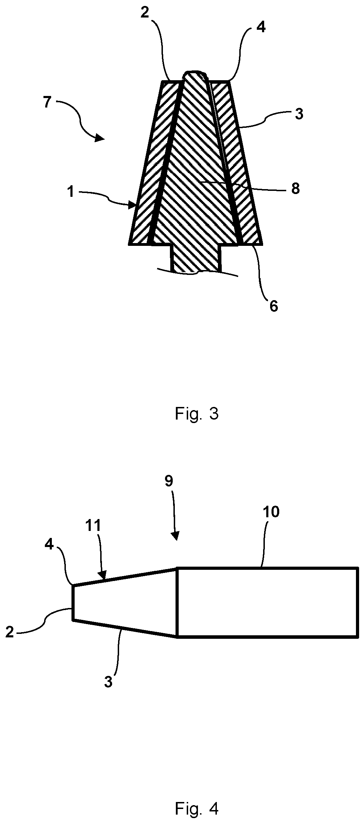

Fig. 3 zeigt eine schematische Darstellung eines Längsschnitts eines Ausführungsbeispiels für ein erfindungsgemäßes System 7 zum Schreiben auf einem nicht gezeigten Touchscreen-Endgerät.

Das System 7 weist einen kabellos oder kabelgebunden mit dem Touchscreen-Endgerät verbindbaren oder verbundenen elektronischen Eingabestift auf, von dem lediglich eine konisch ausgebildete Stiftspitze 8 gezeigt ist. Zudem weist das System 7 eine Aufsteckhülse 1 entsprechend den Fign. 1 und 2 auf, die auf die Stiftspitze 8 aufgesteckt ist. Eine Höhe H der Aufsteckhülse 1 ist kleiner als eine Höhe h der Stiftspitze 8.

Fig. 4 zeigt eine schematische Seitenansicht eines weiteren Ausführungsbeispiels für eine erfindungsgemäße Aufsteckhülse 9 zum Aufstecken auf eine nicht gezeigte, konisch ausgebildete Stiftspitze eines kabellos oder kabelgebunden mit einem nicht gezeigten Touchscreen-Endgerät verbindbaren oder verbundenen, nicht gezeigten elektronischen Eingabestifts.

Die Aufsteckhülse 9 unterscheidet sich dadurch von dem in den Fign. 1 bis 3 gezeigten Ausführungsbeispiel, dass die Aufsteckhülse 9 zusätzlich einen hohlzylinderförmigen Griffabschnitt 10 aufweist, der sich axial an einen als Hohlkegelstumpf ausgebildeten Eingabeabschnitt 11 der Aufsteckhülse 9 anschließt und monolithisch mit dem Eingabeabschnitt 11 verbunden ist. Der Eingabeabschnitt 11 ist entsprechend dem in den Fign. 1 bis 3 gezeigten Ausführungsbeispiel ausgebildet. Zur Vermeidung von Wiederholungen wird auf die obige Beschreibung zu den Fign. 1 bis 3 verwiesen.

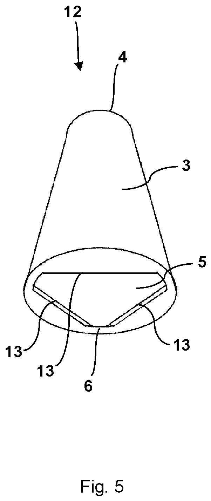

Fig. 5 zeigt eine schematische und perspektivische Darstellung eines weiteren Ausführungsbeispiels für eine erfindungsgemäße Aufsteckhülse 12 zum Aufstecken auf eine nicht gezeigte, konisch ausgebildete Stiftspitze eines kabellos oder kabelgebunden mit einem nicht gezeigten Touchscreen-Endgerät verbindbaren oder verbundenen, nicht gezeigten elektronischen Eingabestifts. Die Aufsteckhülse 12 ist von schräg unten gezeigt.

Die Aufsteckhülse 12 unterscheidet sich dadurch von dem in den Fign. 1 bis 3 gezeigten Ausführungsbeispiel, dass an der Innenmantelfläche 5 der Aufsteckhülse 12 drei jeweils radial nach innen ragende, jeweils teilweise umlaufend an der Innenmantelfläche 5 angeordnete Fixiervorsprünge 13 angeordnet sind, wobei die Fixiervorsprünge 13 gleichmäßig umfangsversetzt relativ zueinander angeordnet sind. Jeder Fixiervorsprung 13 weist eine sekantenartig verlaufende Zur Vermeidung von Wiederholungen wird auf die obige Beschreibung zu den Fign. 1 bis 3 verwiesen.

### Bezugszeichenliste

- 1: Aufsteckhülse
- 2: Deckfläche von 1
- 3: Außenmantelfläche von 1
- 4: Kante zwischen 2 und 3
- 5: Innenmantelfläche von 1
- 6: Grundfläche von 1
- 7: System
- 8: Stiftspitze
- 9: Aufsteckhülse
- 10: Griffabschnitt
- 11: Eingabeabschnitt
- 12: Aufsteckhülse
- 13: Fixiervorsprung
- H: Höhe von 1
- h: Höhe von 8

## Patentansprüche

1. Aufsteckhülse (1, 9, 12) zum Aufstecken auf eine konisch ausgebildete Stiftspitze (8) eines kabellos oder kabelgebunden mit einem Touchscreen-Endgerät verbindbaren oder verbundenen elektronischen Eingabestifts, **dadurch gekennzeichnet, dass** die Aufsteckhülse (1, 9, 12) zumindest teilweise als Hohlkegelstumpf ausgebildet ist und zumindest teilweise aus einem Elastomer besteht.

2. Aufsteckhülse (1, 9, 12) nach Anspruch 1, **dadurch gekennzeichnet, dass** zwischen einer ringförmig ausgebildeten Deckfläche (2) der Aufsteckhülse (1, 9, 12) und einer Außenmantelfläche (3) der Aufsteckhülse (1, 9, 12) eine umlaufende Kante (4) ausgebildet ist.

3. Aufsteckhülse (1, 9, 12) nach Anspruch 2, **dadurch gekennzeichnet, dass** die Aufsteckhülse (1, 9, 12) zumindest im Bereich der umlaufenden Kante (4) aus dem Elastomer besteht.

4. Aufsteckhülse (9) nach einem der Ansprüche 1 bis 3, **dadurch gekennzeichnet, dass** die Aufsteckhülse (9) einen hohlzylinderförmigen Griffabschnitt (10) aufweist, der sich axial an einen als Hohlkegelstumpf ausgebildeten Eingabeabschnitt (11) der Aufsteckhülse (9) anschließt.

5. Aufsteckhülse (9) nach Anspruch 4, **dadurch gekennzeichnet, dass** der Griffabschnitt (10) monolithisch mit dem Eingabeabschnitt (11) verbunden ist.

6. Aufsteckhülse (12) nach einem der Ansprüche 1 bis 5, **dadurch gekennzeichnet, dass** an einer Innenmantelfläche (5) der Aufsteckhülse (12) wenigstens ein radial nach innen ragender, zumindest teilweise umlaufend an der Innenmantelfläche (5) angeordneter Fixiervorsprung (13) angeordnet ist.

7. Aufsteckhülse (1, 9, 12) nach einem der Ansprüche 1 bis 6, **dadurch gekennzeichnet, dass** die Aufsteckhülse (1, 9, 12) vollständig aus dem Elastomer besteht.

8. Aufsteckhülse (1, 9, 12) nach einem der Ansprüche 1 bis 7, **dadurch gekennzeichnet, dass** das Elastomer ein thermoplastisches Elastomer ist.

9. Aufsteckhülse (1, 9, 12) nach Anspruch 8, **dadurch gekennzeichnet, dass** das Elastomer ein thermoplastisches Polyurethan ist.

10. System (7) zum Schreiben auf einem Touchscreen-Endgerät, aufweisend wenigstens einen kabellos oder kabelgebunden mit dem Touchscreen-Endgerät verbindbaren oder verbundenen elektronischen Eingabestift mit einer konisch ausgebildeten Stiftspitze (8), **gekennzeichnet durch** wenigstens eine Aufsteckhülse (1, 9, 12) nach einem der Ansprüche 1 bis 9.

11. System (7) nach Anspruch 10, **dadurch gekennzeichnet, dass** eine Höhe (H) der Aufsteckhülse (1, 9, 12) bzw. des Eingabeabschnitts (11) einer Höhe (h) der Stiftspitze (8) entspricht oder kleiner als die Höhe (h) der Stiftspitze (8) ist.
